Europäisches Patentamt

European Patent Office

Office européen des brevets

(19)

(11) Publication number: **0 117 581**
**A1**

## EUROPEAN PATENT APPLICATION

(12)

(21) Application number: **84200194.3**

(22) Date of filing: **15.02.84**

(51) Int. Cl.³: **B 01 D 33/04**, B 01 D 33/36

(30) Priority: **25.02.83 NL 8300712**

(43) Date of publication of application: **05.09.84**
**Bulletin 84/36**

(84) Designated Contracting States: **CH DE FR GB IT LI**

(71) Applicant: **Esmil Hubert BV, Franekervaart 1, NL-8602 AA Sneek (NL)**

(72) Inventor: **Rijpkema, Jan, Offingawiersterleane 2, NL-8605 CM Sneek (NL)**

(74) Representative: **van Buytene, Arie Jacobus et al, p/a Hoogovens Groep B.V. P.O.Box 10.000, NL-1970 CA IJmuiden (NL)**

(54) **Belt filter.**

(57) A belt filter has an endless porous filter belt and a plurality of rollers around which the belt passes in its continuous path of movement, one roller 12 is at a cleansing location at which the belt is under tension and at which spray nozzles are arranged to spray fluid onto the belt to wash it. To improve the cleaning action, the spray nozzles 14 are arranged to direct spray jets 15 of liquid onto that side of the belt which does not contact the roller 12, at a region where the belt contacts said roller. Preferably, the spray pattern is flat, and radial with respect to the roller axis.

0117581

## BELT FILTER

The invention relates to a belt filter having an endless porous filter belt, which passes over direction-changing members, one of which is a roller at a cleaning location where fluid is directed from nozzles at the belt to clean it.

The term belt filter is used here to include, as well as filtering systems, installations having a continuous belt which carries solids for other treatment purposes than only filtering. The liquid contacting the solid may itself be undergoing treatment, or the liquid may have some treating effect on the solid.

A belt filter is a type generally known. The cleaning of the belt is as a rule achieved by the use of high pressure sprays directed against the belt, while complete separation of the mother liquid and washing liquid can be achieved by mounting the cleaning station in a separate compartment.

However, in the case of a cloth (fabric) belt the cleaning of the cloth from which the belt is manufactured appears to be a problem since particles from the slurry carried on the belt for treatment become fixed in the mesh of the cloth.

FR-A-2296453 discloses a belt filter in which cleaning is carried out at or adjacent a roller round which the belt passes and at which the belt is under tension. Air (or possibly fluid) is directed through the belt in the direction opposite to the filtration direction. The roller may be perforated, so that the air is directed outwardly from the cylinder onto the belt.

US-A-2173256 discusses cleaning of an elastic perforate belt. Blowing of air from inside a drum against the belt is mentioned but said to be unsatisfactory. The solution proposed is to wash the belt in a stretched length of belt between stretching rolls.

The present invention has the object of improving the cleaning of a belt in a belt filter, particularly a cloth (i.e. woven fabric) belt.

The present invention is based on the realisation that, in order to release the particles from the meshes of the cloth it is necessary to open up the meshes. According to the invention the cleaning location is at a roller (or drum) over which the belt is brought under tension, there being liquid spray nozzles on the outside of the roller directing spray jets towards the roller.

In order to make the washing liquid penetrate well into the mesh of the filter cloth which is bent round the roller, the spray nozzles preferably have all a flat spraying pattern approximately parallel to the axis of the roller.

The spraying patterns of the respective nozzles are preferably overlapping.

The diameter of the roller is preferably matched to the mesh size and mesh form of the filter cloth of which the belt is manufactured, to achieve suitable opening of the cloth under tension for cleaning.

An embodiment of the invention will be described as a non-limitative example with reference to the drawings, in which :-

Fig. 1 shows a part of a belt filter embodying the invention in schematic section, in which components not contributing to the invention have been omitted;

Fig. 2 shows on a larger scale the mutual arrangement of roller and spray nozzles in the washing station;

Fig. 3 is a sectional view on the line III-III in Fig. 1.

The illustrated belt filter for slurry treatment has an endless porous filter belt 11 made of cloth which is led over a number of belt direction-changing elements in the form of non-filtering rollers. The discharge of the slurry cake under treatment on the belt takes place at position 3. The belt 11 is manufactured from filter cloth, e.g. a braided fabric or single filament fabric of polyester. The belt can be moved continuously or intermittently, with its speed depending on the process being carried out. The drive motor 4 propels the belt 11 via the drive cylinder 5. A belt tensioning device 6 consisting of a tensioning cylinder and reversing roller is mounted immediately after the drive 4,5.

The washing of the filter belt 11 takes place immediately after release of the cake at 3, and in a separate compartment 10 constructed around one of the rollers 12. The roller 12 has a solid, imperforate outer surface.

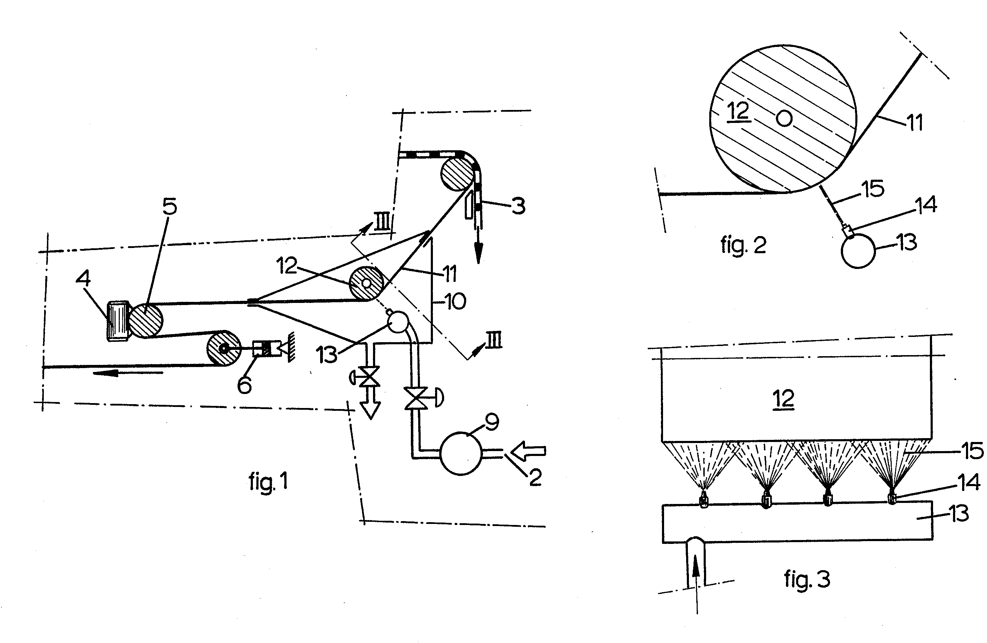

Washing liquid is introduced at 2 and supplied by a pump 9 to a pipe 13, which is located outside the roller 12 and carries a number of spray nozzles 14 with a mutually overlapping thin flat spraying pattern 15, roughly parallel to the axis of the roller 12, as may be seen from Figs. 2 and 3. The spraying pattern 15 is not thicker than 1 cm (Fig. 2) and is directed towards the axis of roller 12 which supports the filter belt. The spraying angle (Fig. 3) is restricted to not greater than 60°, since a larger angle would make the washing liquid have too low an impulse. Since the belt 11 is led over the roller 12 under tension, the curvature of the belt is greatest there and the meshes of the cloth are opened up for the cleaning action of the washing liquid. This cleaning action is also determined by the flow-rate of liquid required and its pressure, in other words its kinetic energy (impulse) is transformed into a washing effect. The high usage of liquid repays itself however and is completely compensated by a good cleansing action and by a higher permissible belt speed.

By the choice of a suitable diameter for the roller 12 for the type of cloth being used, the mesh size and mesh form of the cloth at the location of roller 12 can be influenced to give optimum cleaning results.

The disposition of the spray nozzles 14 is so chosen and adjusted that the spray unit is optimal for the blocked meshes of the filter belt. In this way all the energy carried by the washing liquid, i.e. pressure and quantity, are applied to the cleaning of the belt. The stability of the whole provides a guarantee of optimal energy utilisation.

0117581

The advantages of the separation of the washing action in a separate compartment from the filtering action are that optimal control of each phase of the process is obtained, there is complete separation of mother liquid and washing liquid and high washing efficiency can be achieved.

The invention is by no means restricted to the embodiment which is illustrated, but can be applied with equal success to other cloth filters, such as a drum filter with separating cloth, sieve belt presses, etc. In addition the roller receiving the spray need not be horizontal but may equally well have a vertical orientation.

0117581

CLAIMS:

1.      A belt filter having an endless porous filter belt (11) and a plurality of direction-changing members (5,12) for the belt around which the belt passes in its continuous path of movement, one of said members being a roller (12) at a cleaning location at which the belt is under tension and at which means (14) are arranged to direct fluid onto the belt to clean it,

characterised in that said means is

spray nozzles(14) arranged to direct spray jets (15) of liquid onto that side of the belt which does not contact the roller (12), at a region where the belt contacts said roller.

2.      A belt filter according to claim 1 wherein the spray nozzles (14) provide a flat spray jet pattern (15) directed generally radially with respect to the axis of said roller (12) generally in an axial plane.

3.      A belt filter according to claim 1 or claim 2 wherein the spray jet patterns of said nozzles are mutually overlapping.

4.      A belt filter according to any one of claims 1 to 3 wherein the said spray jets (15) are directed against the face of the belt (11) which, elsewhere in its path, carries a solid being treated.

0117581

fig. 1

fig. 2

fig. 3

0117581

# European Patent Office

**EUROPEAN SEARCH REPORT**

Application number

EP 84 20 0194

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A,D | FR-A-2 296 453 (J. MEYER et al.)<br>* Page 4, lines 29-37 * | 1 | B 01 D 33/04<br>B 01 D 33/36 |
| A,D | US-A-2 173 256 (H.F. JORDAN)<br>* Page 1, lines 11-34 * | 1 | |
| A | EP-A-0 010 747 (G. GÜNTER)<br>* Page 4, lines 19-29 * | 1 | |
| A | FR-A-2 044 891 (J. LAUZERAL et al.)<br>* Page 3, lines 4-14 * | 1-3 | |

TECHNICAL FIELDS
SEARCHED (Int. Cl. 3)

B 01 D
D 21 F

The present search report has been drawn up for all claims

| Place of search | Date of completion of the search | Examiner |
|---|---|---|
| THE HAGUE | 05-06-1984 | KERRES P.M.G. |